# EUROPÄISCHE PATENTANMELDUNG

(11) **EP 0 525 466 A2**
(43) Veröffentlichungstag der Anmeldung: **03.02.1993**
(21) Anmeldenummer: 92111687.7
(22) Anmeldetag: 09.07.1992
(51) Int. Cl.: H02P 6/02, H02K 29/00

(54) **Über einen Umrichter gespeister, drehzahlregelbarer mehrphasiger Motor**

(30) Priorität: 22.07.1991 DE 4124275
(71) Anmelder: SIEMENS AKTIENGESELLSCHAFT, D-80333 München (DE)
(72) Erfinder: Ghosh, Shyamal-Krishna, Dipl.-Ing., W-8740 Bad Neustadt (DE)

(57) **Zusammenfassung**

Die Erfindung betrifft einen über einen Umrichter gespeisten, drehzahlregelbaren mehrphasigen Motor, bei dem zur Verminderung des Steueraufwandes die Ständerwicklung in eine seiner Phasenzahl entsprechende Anzahl von in gleichen Nuten angeordneten Teilwicklungen (1-3) unterteit ist und von jeder Teilwicklung (1-3) jeweils ein Phasenanschluß (R bzs.S bzw.T) über ein steuerbares Halbleiterschaltelement (4-6) an den einen Pol (+) und die übrigen Phasenanschlüsse (S,T bzw.R,T bzw.R,S) an den anderen Pol (-) des Gleichspannungszwischenkreises (7) des Umrichters angeschlossen sind, bei welchem Motor ferner je Teilwicklung (1 bzw.2 bzw.3) jeweils ein zu einer anderen Phase gehörender Phasenanschluß (R bzw.S bzw.T) über das steuerbare Halbleiterschaltelement (4 bzw.5 bzw.6) an den entsprechenden Pol (+) des Gleichspannungszwischenkreises (7) angeschlossen ist.

## Beschreibung

Die Erfindung betrifft einen über einen Umrichter gespeisten, drehzahlregelbaren mehrphasigen Motor.

Ein solcher Motor ist durch die DE-A-28 34 523 bekannt. Zur Drehrichtungs- und Drehzahlsteuerung dieses Motors ist ein Wechselrichter vorgesehen, der aus in Brückenschaltung angeordneten Thyristoren besteht. Somit werden je Phase Zwei Thyristoren benötigt, denen jeweils noch eine Freilaufdiode parallel geschaltet ist. Dies bedeutet somit einen hohen Aufwand an technisch hochwertigen und damit teueren Bauteilen.

Der Erfindung liegt die Aufgabe zugrunde, einen Motor der gattungsgemäßen Art zu schaffen, für dessen Steuerung der technische Aufwand wesentlich reduziert ist.

Die Lösung der gestellten Aufgabe gelingt durch die im Kennzeichen des Anspruchs 1 bzw.2 angegebenen Merkmale. Bei der Lösung gemäß Anspruch 1 ergeben sich durch die Unterteilung der Ständerwicklung galvanisch voneinander getrennte Teilwicklungen, von deren Phasenanschlüssen jeweils einer über ein steuerbares Halbleiter- schaltelement an den einen Pol des Gleichspannungszwischenkreises schaltbar ist. Wegen der galvanischen Trennung der Teilwicklungen brauchen die übrigen Phasenanschlüsse nicht über ein steuerbares Halbleiter-Schaltelement mit dem anderen Pol des Gleichspannungszwischenkreises verbunden zu werden. Bei der Lösung gemäß Anspruch 2 ist für die in Parallelschaltung angeordneten Phasenstränge jeder Teilwicklung ebenfalls nur ein steuerbares Halbleiterschaltelement erforderlich. Dadurch, daß je Teilwicklung jeweils ein anderer Phasenstrang über das steuerbare Halbleiter- schaltelement angeschlossen ist, können diese Phasenstränge der Teilwicklungen zur Erzeugung eines Drehfeldes in der entsprechenden Folge eingeschaltet werden. Die Anzahl von steuerbaren Halbleiterschaltelementen und Freilaufdioden ist gegenüber dem Stand der Technik auf die Hälfte reduziert.

Das Auftreten von störenden Fehlerströmen wird auf einfache Weise dadurch unterbunden, daß die übrigen Phasenanschlüsse der Teilwicklungen über ungesteuerte Gleichrichterelemente an den anderen Pol des Gleichspannungszwischenkreises angeschlossen sind bzw. dadurch, daß die beiden Zweige der Parallelschaltun mit ihrer anderen Anschlußseite jeweils über ein ungesteuertes Gleichrichterelement mit dem anderen Pol des Gleichspannungszwischenkreises verbunden sind.

Die Drehrichtung und/oder Drehzahl kann dadurch gesteuert werden, daß die steuerbaren Halbleiterschaltelemente mit ihren Steueranschlüssen an einen in seiner Steuerfrequenz änderbaren Pulsbreitenmodulator angeschlossen sind, der die Halbleiterschaltelemente in entsprechender Folge ansteuert.

Der Aufwand für die Herstellung der Teilwicklungen kann dadurch klein gehalten werden, daß diese durch parallel gewickelte Leiter gebildet sind.

Anhand eines in der Zeichnung dargestellten Ausführungsbeispieles wird die Erfindung nachfolgend näher beschrieben. Es zeigt:
FIG 1 ein Schaltbild eines Motors bei dem die Phasenstränge der Teilwicklungen in Stern geschaltet sind,
FIG 2 ein Schaltbild eines Motors, bei dem die Phasenstränge der Teilwicklungen in einer Parallelschaltung angeordnet sind.

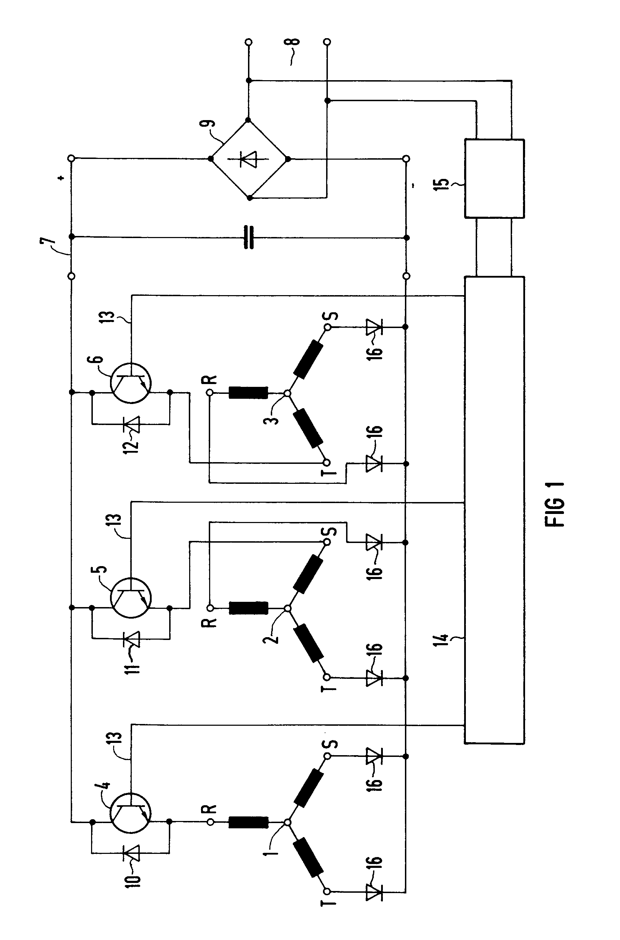

Mit 1,2 und 3 sind drei dreiphasige Teilwicklungen bezeichnet, die zusammen die Ständerwicklung eines Motors bilden. Gemäß FIG 1 ist von jeder Teilwicklung 1 bzw.2 bzw.3 jeweils ein Phasenanschluß R bzw.S bzw.T über ein steuerbares Halbleiterschaltelement, z.B. einen Transistor 4 bzw.5 bzw.6 an den einen Pol (+) eines Gleichspannungszwischenkreises 7 schaltbar. Der Gleichspannungszwischenkreis 7 wird von einem an ein Wechselspannungsnetz 8 angeschlossenen Gleichrichter 9 gespeist, der zusammen mit den als Wechselrichter wirkenden Transistoren 4-6 einen Umrichter bildet. Jedem der Transistoren 4-6 ist jeweils eine Freilaufdiode 10 bzw.11 bzw.12 antiparallel geschaltet. Ferner ist jeder der Transistoren 4-6 mit seinem Steueranschluß 13 an einen Pulsbreitenmodulator 14 angeschlossen, der über einen Spannungsversorger 15 aus dem Wechselspannungsnetz 8 gespeist wird.

Wie aus der Darstellung in FIG 1 erkennbar, ist von jeder Teilwicklung 1 bzw.2 bzw.3 jeweils ein zu einer anderen Phase gehörender Phasenanschluß über das steuerbare Halbleiterschaltelement an den einen Pol (+) des Gleichspannungszwischenkreises 7 angeschlossen. So ist von der Teilwicklung 1 der Phasenanschluß R, von der Teilwicklung 2 der Phasenanschluß S und von der Teilwicklung 3 der Phasenanschluß T über den jeweiligen Transistor 4 bzw.5 bzw.6 mit dem Pluspol des Gleichspannungszwischenkreises 7 verbunden. Diese Phasenanschlüsse stellen somit die gesteuerten Phasenanschlüsse der Teilwicklungen 1-3 dar. Die beiden übrigen, Phasenanschlüsse jeder Teilwicklung 1 bzw.2 bzw.3 sind über ungesteuerte Gleichrichterdioden 16 an den anderen, den Minuspol des Gleichspannungszwischenkreises 7 angeschlossen und bilden somit ungesteuerte Phasenanschlüsse. Die Polarität der Schaltung kann auch umgekehrt werden. Desgleichen kann statt der dargestellten Sternschaltung der Teilwicklungen auch eine Dreieckschaltung gewählt werden.

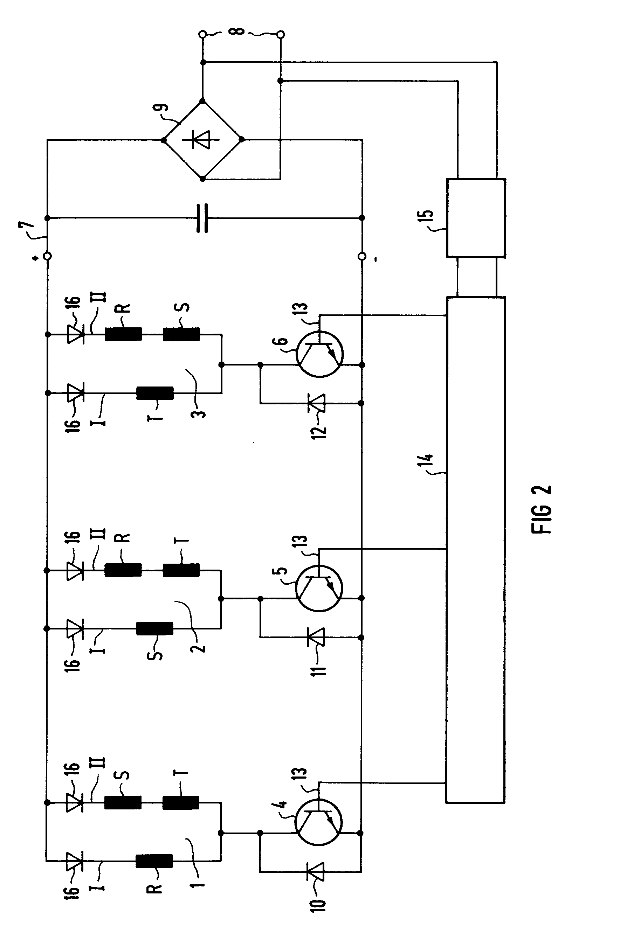

Gemäß dem in FIG 2 gezeigten Schaltbild des Motors sind die Phasenstränge R,S,T der Teilwicklungen 1,2 und 3 jeweils in einer doppelzweigigen Parallelschaltung angeordnet. Hierbei ist jeweils in dem einen Zweig I jeder Parallelschaltung jeweils ein Phasenstrang R bzw.S bzw.T für sich alleine angeordnet. Die beiden übrigen Phasenstränge S,T, bzw.R,T bzw.R,S sind in dem anderen Zweig 11 der betreffenden Parallelschaltung in Reihe liegend und mit umgekehrtem Wickelsinn gegenüber dem im einen Zweig I angeordneten Phasenstrang R bzw.S bzw.T angeordnet.

Mit ihrer einen Anschlußseite sind die beiden Zweige I und 11 gemeinsam jeweils über Transistoren 4 bzw.5 bzw.6 an den Minuspol des Gleichspannungszwischenkreises 7 angeschlossen. Mit ihrer anderen Anschlußseite sind die Zweige I und 11 jeweils über eine ungesteuerte Gleichrichterdiode 16 mit dem Pluspol des Gleichspannungszwischenkreises verbunden.

Bei der Schaltungsvariante nach FIG 2 ergibt sich eine niedrigere Zwischenkreisspannung und damit eine wesentlich günstigere Spannungsbeanspruchung der Transistoren 4-6. Bei einem dreiphasigen Motor sinkt die Zwischenkreisspannung um ein Drittel gegenüber der Zwischenkreisspannung der Schaltungsvariante nach FIG 1.

Die Funktionsweise des Motors ist folgende: Durch den Pulsbreitenmodulator 14 werden die Transistoren 4-6 zeitlich nacheinander angesteuert und damit die entsprechenden Phasenanschlüsse R,S und T bzw. Phasenstränge R,S,T der Teilwicklungen 1-3 nacheinander an Spannung gelegt. Hierdurch entsteht ein Drehfeld, welches den nicht dargestellten Rotor des Motors antreibt. Der Rotor kann mit Permanentmagneten bestückt sein, so daß der Motor als kollektorloser Gleichstrommotor oder als Synchronmotor arbeitet. Es ist auch möglich, einen Käfigläufer vorzusehen, so daß sich ein Asynchronmotor ergibt. Durch entsprechende Steuerung der Frequenz der vom Pulsbreitenmodulator 14 abgegebenen Steuerimpulse kann die Drehzahl des Motors verändert werden.

Infolge der galvanischen Trennung der Teilwicklungen 1-3 und der Ansteuerung jeweils nur eines Phasenanschlusses R bzw.S bzw.T der betreffenden Teilwicklungen 1-3 werden die ein zweites, steuerbares Halbleiterschaltelement erfordernden Kurzschlußverbindungen zwischen dem Plus-und Minuspol des Gleichspannungszwischenkreises 7 vermieden. Damit ist für jede Phase nur ein steuerbares Halbleiterschaltelement erforderlich.

Für die Ausbildung der Teilwicklungen 1-3 entsteht praktisch kein Mehraufwand, wenn die Wicklungsspulen der Ständerwicklung mit einer der Anzahl der Teilwicklungen 1-3 entsprechenden Anzahl von parallelen Leitern ausgebildet werden. Die parallelen Leiter der Wicklungsspulen werden jeweils in den gleichen Ständernuten untergebracht.

Durch die Gleichrichterdioden 16, welche die ungesteuerten Phasenanschlüsse der Teilwicklungen 1-3 mit dem entsprechenden Pol des Gleichspannungszwischenkreises 7 verbinden, wird das Auftreten irgendwelcher schädlicher Rück- oder Querströme verhindert.

## Patentansprüche

1. Über einen Umrichter gespeister, drehzahlregelbarer mehrphasiger Motor, dadurch gekennzeichnet, daß seine Ständerwicklung in eine seiner Phasenzahl entsprechende Anzahl von in gleichen Nuten angeordneten Teilwicklungen (1-3) unterteilt ist, daß von jeder Teilwicklung (1-3) jeweils ein Phasenanschluß (R bzw.S bzw.T) über ein steuerbares Halbleiter- schaltelement (4-6) an den einen Pol (+) und die übrigen Phasenanschlüsse (S,T bzw.R,T bzw.R,S) an den anderen Pol (-) des Gleichspannungszwischenkreises (7) des Umrichters angeschlossen sind, daß ferner je Teilwicklung (1 bzw.2 bzw.3) jeweils ein zu einer anderen Phase gehörender Phasenanschluß (R bzw.S bzw.T) über das steuerbare Halbleiterschaltelement (4 bzw.5 bzw.6) an den entsprechenden Pol (+) des Gleichspannungszwischenkreises (7) angeschlossen ist.

2. Über einen Umrichter gespeister, drehzahlregelbarer mehrphasiger Motor, dadurch gekennzeichnet, daß seine Ständerwicklung in eine seiner Phasenzahl entsprechende Anzahl von in gleichen Nuten angeordneten Teilwicklungen (1-3) unterteilt ist, daß die jeweils zu einer Teilwicklung gehörenden Phasenstränge derart zu einer doppelzweigigen Parallelschaltung zusammengefaßt sind, daß in dem einen Zweig jeweils ein Phasenstrang liegt und in dem anderen Zweig die übrigen Phasenstränge mit entgegengesetztem Wickelsinn gegenüber dem im einen Zweig liegenden Phasenstrang in Reihe geschaltet sind, wobei je Teilwicklung in dem einen Zweig der Parallelschaltung jeweils ein zu einer anderen Phase gehörender Phasenstrang angeordnet ist, daß ferner die beiden Zweige der Parallelschaltung mit ihrer einen Anschlußseite über ein steuerbares Halbleiterschaltelement an den einen Pol und mit ihrer anderen Anschlußseite mit dem anderen Pol des Gleichspannungszwischenkreises des Umrichters verbunden sind.

3. Motor nach Anspruch 1, dadurch gekennzeichnet, daß die übrigen Phasenanschlüsse (S,T bzw.R,T bzw.R,S) der Teilwicklungen (1-3) über ungesteuerte Gleichrichterelemente (16) an den anderen Pol (-) des Gleichspannungszwischenkreises (7) angeschlossen sind.

4. Motor nach Anspruch 2, dadurch gekennzeichnet, daß die beiden Zweige der Parallelschaltung mit ihrer anderen Anschlußseite jeweils über ein ungesteuertes Gleichrichterelement mit dem anderen Pol des Gleichspannungszwischenkreises verbunden sind.

5. Motor nach Anspruch 1 oder 3 bzw. 2 oder 4, dadurch gekennzeichnet, daß die steuerbaren Halbleiterschaltelemente (4-6) mit ihren Steueranschlüssen (13) an einen in seiner Steuerfrequenz änderbaren Pulsbreitenmodulator (14) angeschlossen sind, der die Halbleiterschaltelemente (4-6) in entsprechender Folge steuert.

6. Motor nach einem oder mehreren der vorhergehenden Ansprüche, dadurch gekennzeichnet, daß der Motor als Asynchronmotor mit Käfigläufer ausgebildet ist.

7. Motor nach einem oder mehreren der vorhergehenden Ansprüche, dadurch gekennzeichnet, daß die Teilwicklungen (1-3) durch parallel gewickelte Leiter gebildet sind.
